# FASCICULE DE BREVET EUROPEEN

(11) **EP 2 103 202 B1**
(45) Date de publication et mention de la délivrance du brevet: **03.04.2013**
(21) Numéro de dépôt: 09305214.0
(22) Date de dépôt: 09.03.2009
(51) Int. Cl.: A01D 34/86

(54) **Bloc de travail de coupe et/ou broyage des végétaux destiné à être porté par un véhicule porteur par l'intermédiaire d'un bras**
Arbeitsblock zum Zerschneiden und/oder Häckseln von Pflanzen für den Transport mit einem Trägerfahrzeug mit Hilfe eines Arms
Work block for chopping and/or grinding vegetables designed to be carried by a carrier vehicle by means of an arm

(30) Priorité: 21.03.2008 FR 0801583
(43) Date de publication de la demande: 23.09.2009
(73) Titulaire: Noremat, 54710 Ludres (FR)
(72) Inventeur: Bachmann, Jacques, 54550 Maizieres (FR); Eudes, Frédéric, 88000 Epinal (FR)
(74) Mandataire: Abello, Michel

(56) Documents cités:
- EP-A- 1 570 722
- FR-A- 2 762 962
- FR-A- 2 774 551
- GB-A- 2 206 472
- US-A- 5 537 808

## Description

La présente invention concerne d'une manière générale les blocs de travail mis en oeuvre pour la coupe et/ou le broyage de végétaux telles que des épareuses utilisées pour entretenir des espaces verts, par exemple des bordures de route, fossés, remblais, en assurant les travaux de fauchage et de débroussaillage.

Ces blocs de travail comportent un rotor portant des outils de coupe travaillant à la manière de fléaux pendant la rotation dudit rotor.

La constitution des outils de coupe liée à la vitesse de rotation du rotor permet d'utiliser de tels blocs de travail de coupe et/ou broyage tant pour couper de l'herbe ou des broussailles, que pour élaguer des arbres ou tailler une haie.

De tels blocs de travail sont portées par un engin de travaux publics ou un tracteur par l'intermédiaire d'un bras usuellement disposé à l'arrière du véhicule porteur. Ledit bras s'étend globalement perpendiculairement à la direction de déplacement dudit véhicule afin que le bloc de travail soit positionné sur le côté du véhicule au cours du travail. Pour un travail de fauchage au sol, le rotor du bloc de travail est positionné dans un plan horizontal globalement parallèle au sol tandis que pour un travail de taille d'une haie, le bloc de travail est soulevé par le bras et ledit rotor est dans un plan globalement vertical.

Il a été proposé dans le FR 97 05656, publié sous le N° 2 762 962, appartenant à la demanderesse une disposition permettant d'accrocher le bras porteur B à l'avant du bloc de travail A, par rapport à la direction d'avancement F du véhicule porteur, lors des travaux au sol.

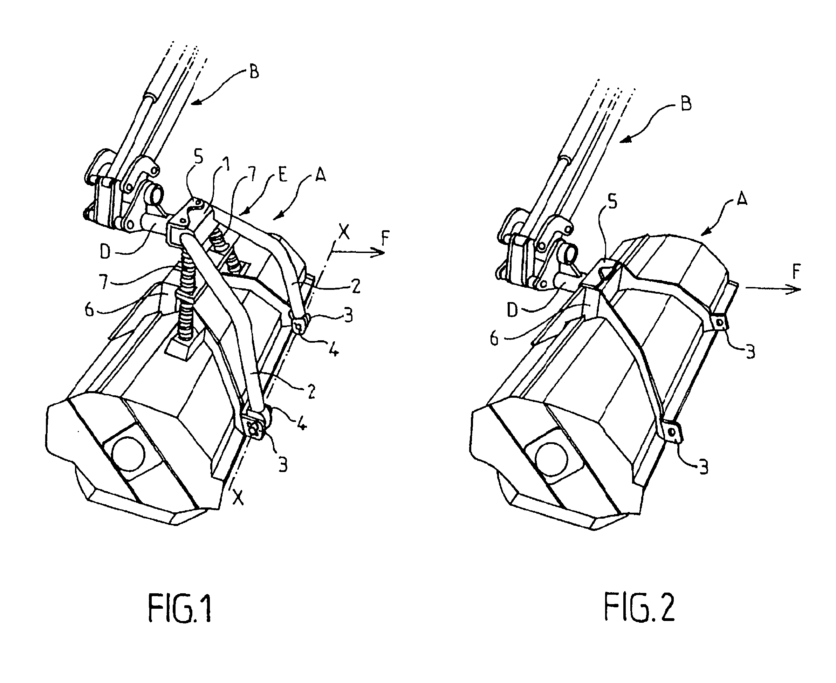

Par cette disposition représentée à la figure 1, le bloc de travail A est tiré par le bras porteur B ce qui d'une part, évite les phénomènes de terrage dudit bloc de travail, c'est-à-dire la tendance de celui-ci à s'enfoncer dans le sol, au cours du travail et fournit une coupe de meilleure qualité en maintenant la hauteur de coupe sensiblement constante. Le conducteur du véhicule est ainsi libéré de la nécessité de surveiller et de régler la hauteur du bloc de travail tout au cours du travail.

Comme visible au dessin, une pièce d'attelage E est interposée entre un arbre horizontal D porté par le bras B et le bloc de travail A. Cette pièce d'attelage E est globalement constituée d'une poutre 1 et de deux bras 2 disposés en V. La poutre 1 est destinée à être positionnée dans un fer en U 5 porté par l'arbre horizontal D pour atteler le bloc de travail A au bras B. Les extrémités avant des bras 2 sont accrochées sur des chapes 3 positionnées à l'avant du bloc de travail A au moyen de tourillons 4.

Au cours du travail de coupe, le bloc de travail A est tiré par les bras 2 et mobile en rotation autour de l'axe XX défini par les tourillons 4.

Lors de travaux de débroussaillage ou de taille en hauteur, il était prévu dans le brevet antérieur d'immobiliser le bloc de travail par rapport au bras B en démontant la pièce d'attelage E et en attelant la bloc de travail A au fer en U 5 du bras B par la poutre 6 (figure 2).

Il a été constaté que les utilisateurs de ces blocs de travail ne modifient pas le montage dudit bloc de travail sur le bras lorsqu'ils passent d'un travail au sol à un travail en hauteur et ne procèdent donc pas au démontage de la pièce d'attelage.

Dans ce cas, le bloc de travail attelé au bras par la pièce d'attelage E est libre en rotation par rapport à la pièce d'attelage. Le débattement du bloc de travail autour de l'axe XX est alors pratiquement imprévisible puisqu'il dépend de l'inclinaison du bloc de travail, de l'inclinaison du bras hydraulique, de la forme du terrain et de la présence d'obstacles tels que de grosses branches que le bloc de travail ne peut couper. En conséquence, le travail n'est pas de bonne qualité. De plus, les changements de position du bloc de travail sont souvent brusques et modifient de manière importante la répartition des masses sur le véhicule porteur ce qui peut provoquer le renversement de celui-ci s'il est déjà soumis à un déséquilibre du à des inégalités du terrain.

Un autre bloc de travail qui correspond au préambule de la revendication 1 est divulgué dans la demande de brevet FR-A-2774551.

La présente invention a en conséquence pour objet d'apporter un perfectionnement aux blocs de travail de coupe et/ou broyage de végétaux rendant possible leur utilisation dans de bonnes conditions que ce soit au sol ou en hauteur sans nécessiter la modification de l'attelage dudit bloc de travail au bras porteur.

A cet effet, selon l'invention, le bloc de travail de coupe et/ou broyage de végétaux destiné à être porté par un véhicule porteur par l'intermédiaire d'un bras et comportant une pièce d'attelage montée libre en rotation sur son avant, est caractérisé en ce qu'il porte une crosse de guidage de ladite pièce d'attelage et des butées basse et haute de limitation du déplacement en rotation de ladite pièce d'attelage.

Comme on pourra le constater à la lecture de la description qui va suivre, un tel montage selon l'invention permet d'obtenir une discontinuité de l'attelage du bloc de travail au véhicule porteur au niveau de la crosse de guidage, car les seules articulations amenées à travailler sont celles entre l'extrémité avant de la pièce d'attelage et le bloc de travail.

Ainsi, les efforts, déplacements et trépidations subis par le bloc de travail pendant le travail ne sont pas transmis au bras porteur, au véhicule et au conducteur de celui-ci. Il en découle un meilleur confort de travail pour le conducteur et une diminution importante de la maintenance à réaliser sur le matériel.

Dans les montages connus, lorsque le bloc de travail rencontre un obstacle, le bras porteur s'écarte vers l'arrière du véhicule porteur et le conducteur doit le ramener vers l'avant, dans la position de travail. Le montage suivant l'invention permettant un déplacement vertical du bloc de travail pour surmonter un obstacle, les écarts vers l'arrière du bras porteur deviennent très rares ce qui facilite le travail du conducteur et permet une avance plus rapide.

Un autre avantage fournit par le montage suivant l'invention tient au fait que le bloc de travail suit beaucoup mieux le profil du terrain puisqu'il n'est plaqué au sol que par son propre poids car le poids du bras ne lui est plus appliqué.

Le bloc de travail selon l'invention est encore remarquable en ce que :
- les butées basse et haute de limitation du déplacement en rotation de ladite pièce d'attelage sont portées par la crosse de guidage,
- la pièce d'attelage est en appui contre la crosse de guidage,
- des moyens élastiques assurent un effort constant entre la pièce d'attelage et la machine tendant à écarter ladite machine de ladite pièce d'attelage,
- les butées de limitation du déplacement de la pièce d'attelage sont réglables en position et en dureté,
- la pièce d'attelage est en appui contre la crosse de guidage par des patins,
- la crosse de guidage est traversée par une lumière dans laquelle est positionné un élément de la pièce d'attelage, les extrémités de ladite lumière constituant les butées basse et haute de limitation du déplacement en rotation de ladite pièce d'attelage,
- la pièce d'attelage comporte deux bras raccordés l'un à l'autre par une traverse en appui contre la face avant de la crosse de guidage et par l'élément se déplaçant dans la lumière de la crosse de guidage,
- il est équipé de capteurs de position détectant le positionnement de la pièce d'attelage contre la butée basse ou la butée haute,
- il est équipé d'un rouleau d'appui et d'un rotor de coupe, et, l'axe dudit rouleau d'appui, l'axe de rotation de la pièce d'attelage et l'axe du rotor de coupe sont alignés.

L'invention sera mieux comprise grâce à la description qui va suivre donnée à titre d'exemple non limitatif en référence aux dessins annexés dans lesquels :
- les figures 1 et 2 montrent un bloc de travail de l'art antérieur attelé à un bras hydraulique porteur en vue d'un travail respectivement au sol et en hauteur,
- la figure 3 représente schématiquement un bloc de travail suivant une première variante de réalisation de l'invention travaillant au sol, sur un sol plat,
- les figures 4 et 5 montrent le bloc de travail de la figure 3 lors d'un passage sur un accident de terrain, respectivement une bosse et un creux,
- la figure 6 montre le bloc de travail de la figure 3 travaillant en hauteur, en n'ayant pas atteint sa position verticale,
- la figure 7 montre le bloc de travail de la figure 3 travaillant en hauteur, incliné au-delà de sa position verticale,
- la figure 8 montre un bloc de travail suivant une variante de réalisation du bloc de travail des figures 3 à 7 dans la même position qu'à la figure 7,
- la figure 9 montre un bloc de travail suivant une seconde variante de réalisation de l'invention,
- la figure 10 est une vue schématique avec coupe partielle, d'un bloc de travail suivant une variante de réalisation de l'invention.

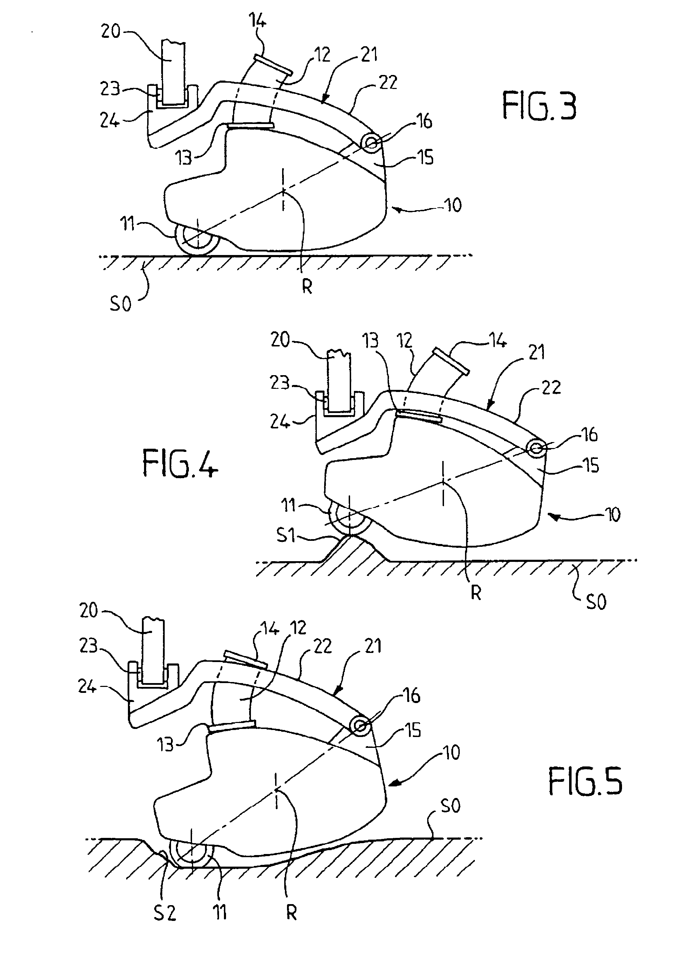

Comme visible au dessin, figures 3 à 8, le bloc de travail 10 selon l'invention est attelé au bras hydraulique porteur 20 par l'intermédiaire d'une pièce d'attelage 21 articulée sur un arbre 23 porté par ledit bras 20.

Ladite pièce d'attelage 21 est composée d'au moins un bras 22 et d'un embout 24, en U dans l'exemple représenté au dessin, auquel est fixé l'arbre 23.

L'extrémité avant de chaque bras 22 est montée libre en rotation sur une chape 15 disposée à l'avant du bloc de travail 10 au moyen d'un tourillon 16.

Suivant l'invention, le bloc de travail 10 porte une crosse de guidage 12 de ladite pièce d'attelage 21. Ladite crosse de guidage 12 est disposée sur la face supérieure du capot dudit bloc de travail 10, s'étend globalement perpendiculairement audit capot et présente une forme générale arquée.

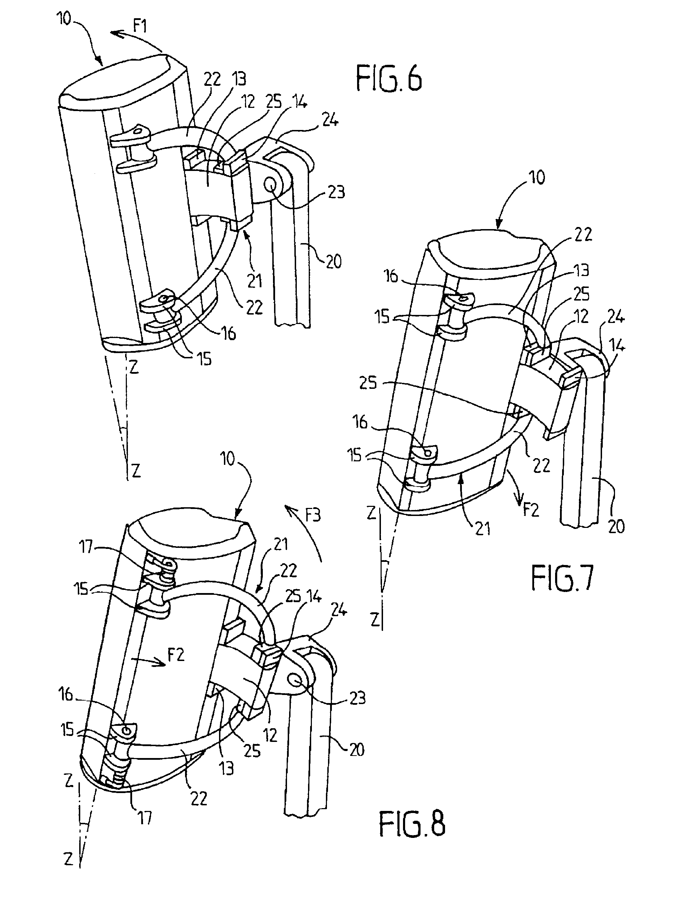

Dans l'exemple de réalisation représenté au dessin, et mieux visible aux figures 6 à 8, la pièce d'attelage 21 est en appui contre la crosse de guidage 12 par des patins 25. Ladite pièce d'attelage 21 est libre de se déplacer le long de ladite crosse de guidage 12 au cours de ses déplacements en rotation autour de l'axe défini par les tourillons 16.

Le déplacement de la pièce d'attelage 21 le long de la crosse de guidage 12 est limité par des butées basse 13 et haute 14, disposées sur la crosse de guidage 12 dans les exemples de réalisations représentés au dessin.

De manière préférée, les patins 25 de la pièce d'attelage 21 sont en appui contre les deux faces latérales de ladite crosse de guidage 12 afin d'éviter un déplacement latéral du bloc de travail 10.

Lorsque le bloc de travail 10 travaille sur un sol S0 plat, figure 3, la position du bras hydraulique porteur 20 est réglée en fonction du réglage en hauteur du rouleau d'appui 11 du bloc de travail 10, de telle sorte que la pièce d'attelage 21 soit globalement disposée à mi-distance entre les butées basse 13 et haute 14 de la crosse de guidage 12.

Comme on peut le remarquer, pour laisser la possibilité d'améliorer la capacité du bloc de travail à travailler en hauteur comme cela sera décrit plus loin, et dans la mesure où ceux-ci ne se sont pas révélés totalement indispensables, les moyens élastiques 7 tels que ceux prévus dans l'art antérieur (figure 1) afin de réduire la pression d'appui du bloc de travail sur le sol, ne sont pas mis en oeuvre.

Si au cours du travail, le rouleau d'appui 11 est sur une bosse S1, le bloc de travail 10 est entraîné en rotation dans le sens des aiguilles d'une montre autour de l'axe défini par les tourillons 16 et la butée basse 13 est rapprochée de la pièce d'attelage 21. La figure 4 représente la position maximale que peut prendre le bloc de travail 10 pour laquelle la butée basse 13 de la crosse de guidage 12 est en appui contre la pièce d'attelage 21.

A l'inverse, lorsque au cours du travail, le rouleau d'appui 11 est dans un creux S2, le bloc de travail 10 est entraîné en rotation dans le sens inverse des aiguilles d'une montre autour de l'axe défini par les tourillons 16 et la butée haute 14 est rapprochée de la pièce d'attelage 21. La figure 5 représente la position maximale que peut prendre le bloc de travail 10 pour laquelle la butée haute 14 de la crosse de guidage 12 est en appui contre la pièce d'attelage 21.

Comme visible aux figures 3 à 5, le rouleau d'appui 11 du bloc de travail 10 est disposé pratiquement à l'aplomb du bras hydraulique porteur 20. Cette disposition permet d'obtenir une coupe de très bonne qualité mais ne peut être mise en oeuvre que pour des blocs de travail destinés au seul travail au sol.

En effet, lors d'un travail en hauteur la rotation du bloc de travail est limitée par la butée de celui-ci contre le bras hydraulique porteur 20.

C'est pourquoi, comme visible aux figures 6 à 9, le bloc de travail est attaché au bras hydraulique porteur 20 par des moyens l'écartant vers l'avant d'une distance suffisante qui lui permet de tourner librement à l'avant dudit bras. A titre d'exemple, le rouleau d'appui est disposé à environ 17 cm à l'avant de l'aplomb du bras porteur.

La mise en oeuvre de l'invention est particulièrement intéressante lorsque le bloc de travail 10 est amené à travailler en hauteur, comme représenté aux figures 6 à 8. En effet, la crosse de guidage 12 assure un maintien mécanique supplémentaire de la pièce d'attelage 21 à l'encontre d'un déplacement latéral et permet d'éviter des déformations de celle-ci, par exemple au niveau de l'embout en U 24, de l'arbre 23, des bras 22 ou des tourillons 16.

De manière connue en soi, le bras hydraulique porteur 20 est disposé sur le côté du véhicule porteur et déplié afin que le travail soit effectué sur le côté du véhicule et pratiquement au niveau de la cabine de pilotage de sorte que l'utilisateur puisse facilement surveiller le travail de la machine.

Lors d'un travail en hauteur, le bras 20 est relevé dans une position proche de la verticale comme représenté à la figure 6.

Le véhicule porteur non représenté au dessin est positionné sur la droite du bras 20. En conséquence, la figure 6 montre le bloc de travail 10 dans une position proche de la verticale symbolisée par l'axe ZZ au dessin, mais n'ayant pas dépassé cette position, et les figures 7 et 8 montrent ledit bloc de travail 10 dans une position au-delà de la verticale.

Dans la position représentée à la figure 6, le bloc de travail 10 est entraîné par l'effet de la gravité dans la direction représentée par la flèche F1.

Au cours d'un tel déplacement du à son poids dans la direction F1, le bloc de travail 10 se déplace en rotation dans le sens inverse des aiguilles d'une montre autour des tourillons 16 et la crosse de guidage 12 glisse le long de la pièce d'attelage 21 jusqu'à être en appui contre celle-ci par la butée haute 14.

Toutefois, le bloc de travail 10 reste libre de se déplacer dans le sens des aiguilles d'une montre autour des tourillons 16 en vue de s'effacer lorsque le rotor de coupe rencontre un obstacle.

Dans une telle position proche de la verticale du bloc de travail 10, la mise en oeuvre suivant l'invention d'une crosse de guidage 12 munie de butées basse 13 et haute 14 permet alors de limiter la rotation due à son poids du bloc de travail 10 tout en lui laissant la possibilité de s'effacer lorsqu'il rencontre un obstacle.

Lorsque le bloc de travail 10 est positionné au-delà de sa position verticale, figure 7, il est entraîné par son poids dans le sens des aiguilles d'une montre autour des tourillons 16, suivant la flèche F2, et la crosse de guidage 12 se déplace devant la pièce d'attelage 21 jusqu'à être en butée contre celle-ci par la butée basse 13.

Dans la variante de réalisation de la figure 8, le bloc de travail 10 est particulièrement adapté à un travail en hauteur par la mise en oeuvre de moyens élastiques assurant un effort constant entre la pièce d'attelage 21 et le bloc de travail 10 tendant à écarter ce dernier de la pièce d'attelage dans la direction de la flèche F3. Ainsi, dans la position représentée à la figure 8 pour laquelle le bloc de travail 10 est positionné au-delà de la verticale, ledit bloc de travail est en appui contre la pièce d'attelage 21 par la butée haute 14.

Les moyens élastiques sont par exemple constitués par les ressorts 17 positionnés aux extrémités avant des bras de la pièce d'attelage 21. D'autres réalisations peuvent bien entendu être prévues, à titre d'exemple lesdits moyens élastiques peuvent être constitués par des ressorts interposés entre l'une et/ou l'autre des butées basse 13 et haute 14 et la pièce d'attelage 21.

Dans cette variante de réalisation, le bloc de travail 10 reste libre de se déplacer en rotation dans le sens des aiguilles d'une montre afin d'éviter un obstacle quelle que soit sa position par rapport à la verticale.

Il convient de noter que l'effort qui doit être appliqué par de tels moyens élastiques 17 lorsque le bloc de travail 10 travaille en hauteur n'est pas important et qu'en conséquence cet effort n'est pas gênant lors d'un travail au sol.

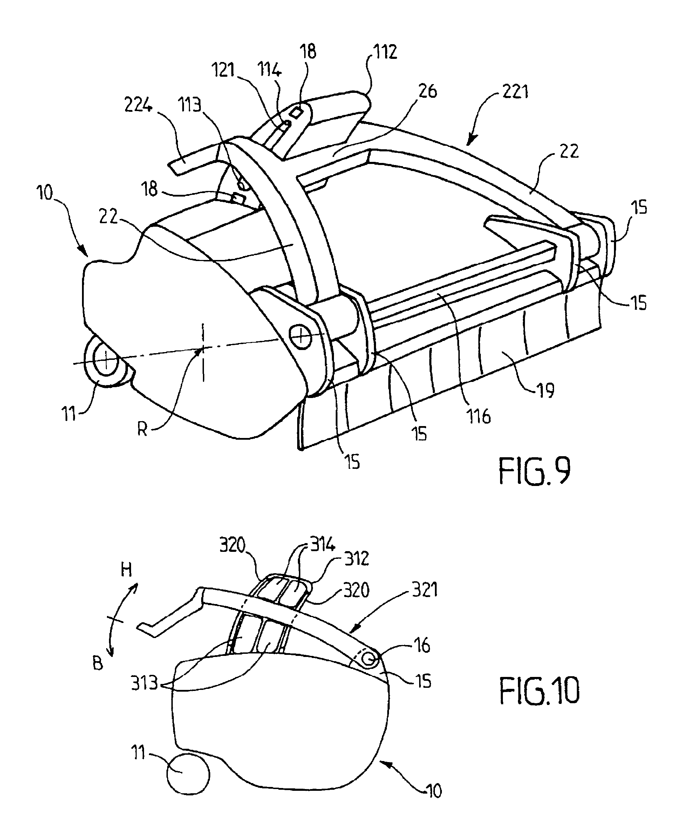

La figure 9 montre une variante de réalisation dans laquelle la crosse de guidage 112 est plus massive que celle représentée sur les figures 1 à 8.

Dans l'exemple de réalisation représenté au dessin, la crosse de guidage 112 est traversée par une lumière 121 dans laquelle est positionné un élément de la pièce d'attelage 221, par exemple une tige, non visible au dessin. Les butées basse 113 et haute 114 de la crosse de guidage 112 sont constituées par les extrémités de la lumière 121.

La pièce d'attelage 221 comporte deux bras 22 raccordés l'un à l'autre par une traverse 26 pouvant être en appui contre la face avant de la crosse de guidage 112, l'élément se déplaçant dans la lumière 121 de la crosse de guidage 112 et une plaque d'extrémité 224 portant un embout en U non représenté au dessin.

La pièce d'attelage 221 est en appui contre la crosse de guidage à la fois sur les faces latérales et frontale de celle-ci et dans la lumière 121.

Les tourillons 16 de la réalisation représentée aux figures 1 à 8 sont remplacés par un axe 116 s'étendant sur toute la largeur du bloc de travail 10. Ledit axe 116 est par exemple une barre de torsion assurant le rôle des moyens élastiques tendant à écarter le bloc de travail 10 de la pièce d'attelage 221.

Suivant une forme de réalisation non représentée au dessin, la pièce d'attelage peut avoir une forme globalement triangulaire, les deux côtés du triangle constituant les bras en V de celle-ci et étant raccordés respectivement à l'avant du bloc de travail et à des moyens d'accrochage au bras hydraulique porteur.

La figure 10 représente une variante de réalisation d'un bloc de travail selon l'invention selon laquelle les butées limitant le déplacement de la pièce d'attelage 321 sont réglables.

La position et la dureté desdites butées peuvent être réglées d'une part de manière à contrôler l'amplitude du déplacement relatif de la pièce d'attelage 321 par rapport à la crosse de guidage 312 et d'autre part de manière à fournir un appui plus ou moins élastique.

A cet effet, différents moyens de réalisation desdites butées peuvent être mis en oeuvre tels que des vérins qu'ils soient hydrauliques ou électriques, des coussins gonflables,...

Dans la forme de réalisation représentée au dessin, la crosse de guidage 312 constitue un boîtier creux à travers lequel se déplace la pièce d'attelage 321 positionnée dans deux fentes 320 faisant face à l'avant et à l'arrière du bloc de travail 10.

Chaque butée 313, 314 est, dans cet exemple, constituée par au moins un coussin gonflable, deux tels coussins dans l'exemple de réalisation représenté au dessin, disposés de part et d'autre de la pièce d'attelage 321, entre celle-ci et les faces inférieure et supérieure de la crosse de guidage 312. Les coussins gonflables disposés d'un même côté de la pièce d'attelage peuvent être gonflés de manière identique ou non afin d'adapter l'élasticité de la butée qu'ils constituent.

Lesdits coussins gonflables 313, 314 sont gonflés et dégonflés par des moyens non représentés au dessin, par exemple disposés dans un logement de la crosse de guidage 312 non occupé par les coussins 313, 314.

En modifiant le gonflage desdits coussins 313, 314, l'utilisateur du bloc de travail peut modifier le comportement du bloc de travail.

En gonflant tous les coussins 313 et 314 constituant les butées, on fixe une position relative du bloc de travail 10 et de la pièce d'attelage 321. Dans l'exemple représenté au dessin, la pièce d'attelage 321 est globalement disposée entre ses deux positions extrêmes.

En dégonflant tous les coussins 313 et 314, le déplacement en rotation du bloc de travail 10 par rapport à la pièce d'attelage 321 est libre, les coussins constituant des butées de fin course.

Lors d'un travail en hauteur, les coussins 313 sont gonflés tandis que les coussins 314 ne sont pas ou sont peu gonflés de sorte que le bloc de travail 10 soit écarté de la pièce d'attelage 321 par une rotation dans le sens de la flèche H.

Inversement, lors du transport du bloc de travail, seuls les coussins 314 sont gonflés de manière à rapprocher le bloc de travail 10 de la pièce d'attelage 321 par une rotation dans le sens de la flèche B.

La mise en oeuvre de coussins gonflables permet de conserver une capacité de déplacement relatif du bloc de travail 10 et de la pièce d'attelage 321 au cours du travail du fait de leur élasticité et donc d'amortir les chocs ou de filtrer les vibrations.

En variante, le bloc de travail selon l'invention peut également être équipé de capteurs de position 18 afin de détecter le positionnement de la pièce d'attelage contre la butée basse ou la butée haute de la crosse de guidage et de fournir cette information soit sur un afficheur à la disposition du conducteur du véhicule, soit à un dispositif de réglage de la position du bras hydraulique porteur afin que la position du bras soit modifiée en sorte que le bloc de travail reste libre de se déplacer en rotation autour de l'axe pour s'écarter devant les obstacles ou suivre les inégalités du sol.

Les exemples de réalisation de l'invention représentés au dessin présentent de plus une caractéristique structurelle avantageuse en ce qu'elle permet la réalisation d'un travail de coupe de qualité améliorée.

Comme matérialisé sur les figures 3 à 5 et 9, l'axe R du rotor de coupe est positionné sur la droite reliant l'axe du rouleau d'appui 11 à l'axe de rotation de la pièce d'attelage 21, 221 sur l'avant du bloc de travail, c'est-à-dire l'axe des tourillons 16 ou l'axe 116.

Cette disposition particulière permet de proposer un bloc de travail dont la hauteur de coupe varie peu lors de son passage sur des irrégularités du terrain.

## Revendications

1. Bloc de travail de coupe et/ou broyage de végétaux destiné à être porté par un véhicule porteur par l'intermédiaire d'un bras et comportant une pièce d'attelage montée libre en rotation sur son avant, **caractérisé en ce qu'**il porte une crosse de guidage (12, 112, 312) de ladite pièce d'attelage (21, 221, 321) et des butées basse (13, 113, 313) et haute (14, 114, 314) de limitation du déplacement en rotation de ladite pièce d'attelage (21, 221, 321).

2. Bloc de travail selon la revendication 1, **caractérisé en ce que** les butées basse (13, 113, 313) et haute (14, 114, 314) de limitation du déplacement en rotation de ladite pièce d'attelage (21, 221, 321) sont portées par la crosse de guidage (12, 112, 312).

3. Bloc de travail selon la revendication 1 ou selon la revendication 2, **caractérisé en ce que** la pièce d'attelage (21, 221, 321) est en appui contre la crosse de guidage (12, 112, 312)

4. Bloc de travail selon l'une quelconque des revendications précédentes, **caractérisé en ce que** des moyens élastiques (17, 116) assurent un effort constant entre la pièce d'attelage et la machine tendant à écarter ladite machine de ladite pièce d'attelage.

5. Bloc de travail selon l'une quelconque des revendications précédentes, **caractérisé en ce que** les butées (313, 314) de limitation du déplacement de la pièce d'attelage (321) sont réglables en position et en dureté.

6. Bloc de travail selon l'une quelconque des revendications précédentes, **caractérisé en ce que** la pièce d'attelage (21) est en appui contre la crosse de guidage (12) par des patins (25).

7. Bloc de travail selon l'une quelconque des revendications précédentes 1 à 4, **caractérisé en ce que** la crosse de guidage (112) est traversée par une lumière (121) dans laquelle est positionné un élément de la pièce d'attelage (221), les extrémités de ladite lumière (121) constituant les butées basse (113) et haute (114) de limitation du déplacement en rotation de ladite pièce d'attelage (221).

8. Bloc de travail selon la revendication 7, **caractérisé en ce que** la pièce d'attelage (221) comporte deux bras (220) raccordés l'un à l'autre par une traverse (26) en appui contre la face avant de la crosse de guidage (112) et par l'élément se déplaçant dans la lumière (121) de la crosse de guidage (112).

9. Bloc de travail selon l'une quelconque des revendications précédentes, **caractérisé en ce qu'**il est équipé de capteurs de position (18) détectant le positionnement de la pièce d'attelage contre la butée basse ou la butée haute.

10. Bloc de travail selon l'une quelconque des revendications, équipé d'un rouleau d'appui (11) et d'un rotor de coupe, **caractérisé en ce que** l'axe dudit rouleau d'appui (11), l'axe de rotation de la pièce d'attelage (21, 221, 321) et l'axe du rotor de coupe sont alignés.

## Claims

1. Plant cutting and/or crushing work block designed to be carried by a carrying vehicle by means of an arm and comprising a coupling part mounted free in rotation on its front, **characterised by** the fact that it carries a guide unit (12, 112, 312) for said coupling block (21, 221, 321) and lower (13, 113, 313) and upper (14, 114, 314) stops limiting the rotational movement of said coupling part (21, 221, 321).

2. Work block according to claim 1, **characterised by** the fact that the lower (13, 113, 313) and upper (14, 114, 314) stops limiting the rotational movement of said coupling part (21, 221, 321) are carried by the guide unit (12, 112, 312).

3. Work block according to claim 1 or according to claim 2, **characterised by** the coupling part (21, 221, 321) bearing against the guide unit (12, 112, 312).

4. Work block according to any one of the above claims, **characterised by** the elastic means (17, 116) applying a constant force between the coupling part and the machine tending to move said machine away from said coupling part.

5. Work block according to any one of the above claims, **characterised by** the fact that the stops (313, 314) limiting the movement of the coupling part (321) are adjustable in position and in hardness.

6. Work block according to any one of the above claims, **characterised by** the coupling part (21) bearing against the guide unit (12) via skids (25).

7. Work block according to any one of the above claims 1 to 4, **characterised by** the fact that the guide unit (112) comprises an opening (121) in which an element of the coupling part (221) is positioned, the ends of said opening (121) constituting the lower (113) and upper (114) stops limiting the rotational movement of said coupling part (221).

8. Work block according to claim 7, **characterised by** the coupling part (221) comprising two arms (220) connected to each other by a crosspiece (26) bearing against the front face of the guide unit (112) and by the element moving in the opening (121) of the guide unit (112).

9. Work block according to any one of the above claims, **characterised by** its being equipped with pressure sensors (18) detecting the positioning of the coupling part against the lower stop or the upper stop.

10. Work block according to any one of the claims, equipped with a bearing roller (11) and a cutting rotor, **characterised by** the axis of said bearing roller (11), the axis of rotation of the coupling part (21, 221, 321) and the axis of the cutting rotor being aligned.

## Patentansprüche

1. Arbeitsblock zum Schneiden und / oder Zerkleinern von Pflanzen, der dazu bestimmt ist, von einem Trägervehikel mittels eines Arms getragen zu werden und der ein Kupplungsteils umfasst, das frei in Rotation auf seinem Vorderteil montiert ist, **dadurch gekennzeichnet, dass** er einen Führungskolben (12, 112, 312) des genannten Kupplungsteils (21, 221, 321) und niedrige (13, 113, 313) und hohe (14, 114, 314) Anschläge zur Begrenzung der Verschiebung des genannten Kupplungsteils (21, 221, 321) in Rotation trägt.

2. Arbeitsblock gemäß Anspruch 1, **dadurch gekennzeichnet, dass** der niedrige (13, 113, 313) und der hohe (14, 114, 314) Anschlag zur Begrenzung der Verschiebung in Rotation des genannten Kupplungsteils (21, 221, 321) von dem Führungskolben (12, 112, 312) getragen werden.

3. Arbeitsblock gemäß Anspruch 1 oder gemäß Anspruch 2, **dadurch gekennzeichnet, dass** das Kupplungsteil (21, 221, 321) sich gegen den Führungskolben (12, 112, 312) aufstützt.

4. Arbeitsblock gemäß einem der vorherigen Ansprüche, **dadurch gekennzeichnet, dass** die elastischen Mittel (17, 116) eine konstante Wirkung zwischen dem Kupplungsteil und der Maschine gewährleisten, die tendenziell die genannte Maschine von dem genannten Kupplungsteil entfernt.

5. Arbeitsblock gemäß einem der vorherigen Ansprüche, **dadurch gekennzeichnet, dass** die Anschläge (313, 314) zur Begrenzung der Verschiebung des Kupplungsteils (321) in der Position und in der Härte einstellbar sind.

6. Arbeitsblock gemäß einem der vorherigen Ansprüche, **dadurch gekennzeichnet, dass** das Kupplungsteil (21) sich durch Kufen (25) gegen den Führungskolben (12) aufstützt.

7. Arbeitsblock gemäß einem der vorherigen Ansprüche 1 bis 4, **dadurch gekennzeichnet, dass** der Führungskolben (112) durch eine Öffnung (121) durchquert wird, in der ein Element des Kupplungsteils (221) positioniert ist, wobei die Enden der genannten Öffnung (121) die niedrigen (113) und hohen (114) Anschläge zur Begrenzung der Verschiebung in Rotation des genannten Kupplungsteils (221) darstellen.

8. Arbeitsblock gemäß Anspruch 7, **dadurch gekennzeichnet, dass** das Kupplungsteil (221) zwei Arme (220) umfasst, die aneinander durch eine Querleiste (26) angeschlossen sind, die sich gegen die vordere Seite des Führungskolbens (112) aufstützen, und durch ein Element, das sich in der Öffnung (121) des Führungskolbens (112) verschiebt.

9. Arbeitsblock gemäß einem der vorherigen Ansprüche, **dadurch gekennzeichnet, dass** er mit Lagesensoren (18) ausgerüstet ist, die die Positionierung des Kupplungsteils gegen den niedrigen Anschlag oder den hohen Anschlag feststellt.

10. Arbeitsblock gemäß einem der Ansprüche, der mit einer Stützrolle (11) und einem Schneidrotor ausgerüstet ist, **dadurch gekennzeichnet, dass** die Achse der genannten Stützrolle (11), die Rotationsachse des Kupplungsteils (21, 221, 321) und die Achse des Schnittrotors gefluchtet sind.
